# EUROPEAN PATENT APPLICATION

(11) **EP 3 614 233 A1**
(43) Date of publication of application: **26.02.2020**
(21) Application number: 18787234.6
(22) Date of filing: 06.04.2018
(51) Int. Cl.: G06F 3/01, H04M 1/00

(54) **ELECTRONIC DEVICE**

(30) Priority: 18.04.2017 JP 2017082324
(71) Applicant: Kyocera Corporation, Kyoto-shi, Kyoto 612-8501 (JP)
(72) Inventor: UENO Yasuhiro, Kyoto-shi Kyoto 612-8501 (JP); TANABE Shigeki, Kyoto-shi Kyoto 612-8501 (JP); MORITA Hideki, Kyoto-shi Kyoto 612-8501 (JP); MASUIKE Isao, Kyoto-shi Kyoto 612-8501 (JP); YAMAUCHI Koutaro, Kyoto-shi Kyoto 612-8501 (JP); SAKUMA Manabu, Kyoto-shi Kyoto 612-8501 (JP); SHIMADA Kenji, Kyoto-shi Kyoto 612-8501 (JP)
(74) Representative: Viering, Jentschura & Partner mbB Patent- und Rechtsanwälte
(86) International application number: PCT/JP2018/014728
(87) International publication number: WO 2018/193876

(57) **Abstract**

An electronic device 1 includes a first proximity sensor 18, a second proximity sensor 18, and a controller 11 configured to select between first gesture detection based on a value output from the first proximity sensor 18 and second gesture detection based on a value output from the second proximity sensor 18, based on a state of the electronic device 1. When one of the first proximity sensor 18 and the second proximity sensor 18 satisfies a predetermined condition, the controller may select the other one of the first proximity sensor 18 and the second proximity sensor 18.

## Description

### CROSS REFERENCE TO RELATED APPLICATION

This application claims priority to and the benefit of Japanese Patent Application No. 2017-082324 (filed on April 18, 2017), the entire contents of which are incorporated herein by reference.

### TECHNICAL FIELD

The present disclosure relates to an electronic device.

### BACKGROUND

For example, electronic devices such as smartphones and tablet PCs are generally provided with a touch panel. Typically, users control the electronic devices by touching the touch panels. Recently, electronic devices that detect gestures performed by users positioned remote from the electronic devices using a proximity sensor such as an infrared sensor and perform input operations corresponding to the gestures are known.

### CITATION LIST

### Patent Literature

PTL 1: JP-A-2015-225493

### SUMMARY

### (Technical Problem)

In the mobile terminal according to the PTL 1, a proximity sensor is provided on the front surface (the surface where the display is provided, i.e., the front side). Thus, in order to perform a gesture input operation, a user needs to perform a gesture in front of the mobile terminal.

Here, a mobile terminal may be used while having the front surface facing up (i.e., the front surface facing the ceiling) on a table. In order to perform a gesture input operation in this state, the user needs to extend their hand to the vicinity of the front surface of the mobile terminal. Also, a mobile terminal may be carried in, for example, a pocket. In order to perform a gesture input operation in this state, the user needs to take the mobile terminal out of the pocket and direct the front surface to the user before performing a gesture. As described above, in order to perform a gesture input operation using the mobile terminal described in the PTL 1, the user may need to move the mobile terminal in accordance with the orientation thereof or to adjust the orientation of the mobile terminal. Thus, there is a risk that the user experiences poor operability in performing an input operation based on a gesture.

Thus, it could be helpful to provide an electronic device that improves user operability associated with a gesture.

### (Solution to Problem)

An electronic device according to an embodiment of the present disclosure includes a first proximity sensor, a second proximity sensor, and a controller configured to select between first gesture detection based on a value output from the first proximity sensor and second gesture detection, based on a value output from the second proximity sensor.

An electronic device according to an embodiment of the present disclosure includes a first proximity sensor, a second proximity sensor, and a controller configured to switch between the first proximity sensor and the second proximity sensor, based on a state of the electronic device.

### (Advantageous Effect)

According to an embodiment of the present disclosure, an electronic device capable of improving user operability associated with a gesture can be provided.

### BRIEF DESCRIPTION OF THE DRAWINGS

In the accompanying drawings:
FIG. 1 is a diagram illustrating a schematic configuration of an electronic device according to an embodiment of the present disclosure;
FIG. 2 is a diagram illustrating a state in which a user operates the electronic device by performing a gesture;
FIG. 3 is a diagram illustrating a schematic configuration of a proximity sensor;
FIG. 4 is a graph illustrating the transition of values detected by each infrared photo diode;
FIG. 5 is a diagram illustrating an example state in which the electronic device is operated by a gesture;
FIG. 6 is a diagram illustrating an example of the state of FIG. 5 in which the orientation of the electronic device is different;
FIG. 7A is a top view of the electronic device;
FIG. 7B is a left-side view of the electronic device;
FIG. 7C is an elevation view of the electronic device;
FIG. 7D is a right-side view of the electronic device;
FIG. 7E is a rear view of the electronic device;
FIG. 7F is a bottom view of the electronic device;
FIG. 8 is a diagram illustrating a state in which the electronic device is placed in a pocket;
FIG. 9 is a diagram illustrating a state in which the electronic device is placed on a table with the front surface facing up;
FIG. 10A and FIG. 10B are diagrams illustrating respective states in which a gesture is performed on a rear side of the electronic device; and
FIG. 11 is an example flowchart illustrating a selection operation for selecting between a first proximity sensor and a second proximity sensor.

### DETAILED DESCRIPTION

### Electronic Device Configuration

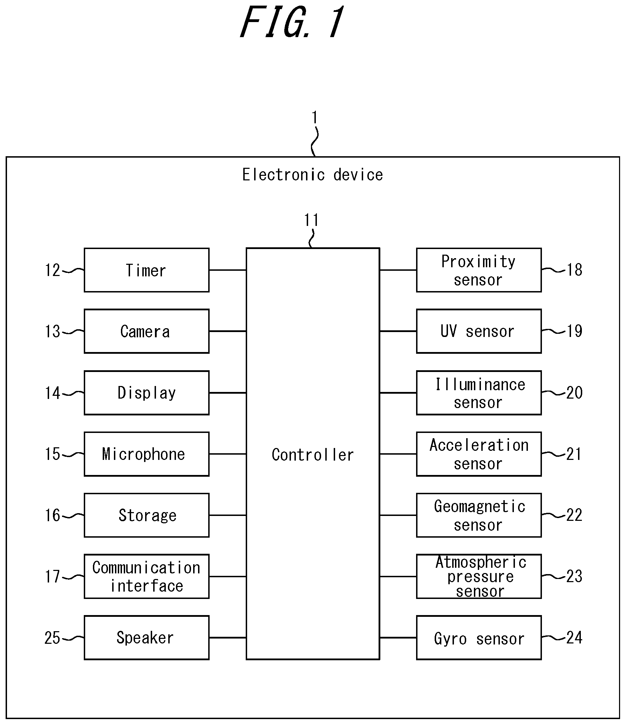

An electronic device 1 according to an embodiment includes a proximity sensor 18 (a gesture sensor) and a controller 11 as illustrated in FIG. 1. The electronic device 1 also includes a timer 12, a camera 13, a display 14, a microphone 15, a storage 16, a communication interface 17, and a speaker 25. In the present embodiment, the electronic device 1 further includes a UV sensor 19, an illuminance sensor 20, an acceleration sensor 21, a geomagnetic sensor 22, an atmospheric pressure sensor 23, and a gyro sensor 24. FIG. 1 illustrates an example. The electronic device 1 does not need to include all of the constituent elements illustrated in FIG. 1. Also, the electronic device 1 may include constituent elements other than those illustrated in FIG. 1.

When a predetermined period of time has elapsed after receiving a timer operating instruction from the controller 11, the timer 12 outputs a signal to that effect to the controller 11. The timer 12 may be provided independently of the controller 11 as illustrated in FIG. 1 or built into the controller 11.

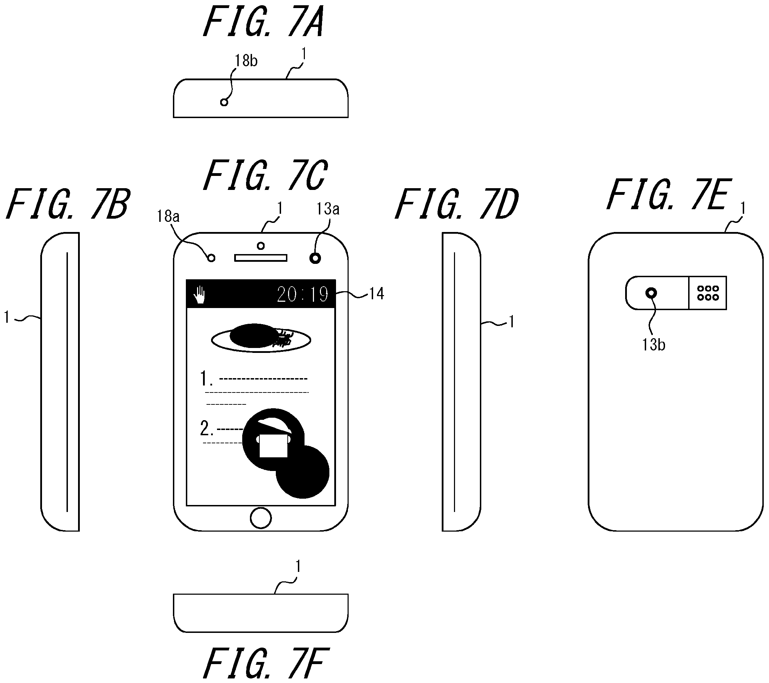

The camera 13 captures an image of an object located in the vicinity of the electronic device 1. The camera 13 is, for example, a front-facing camera 13a (see FIG. 7C) provided on a surface (the front surface) of the electronic device 1 having the display 14 provided thereto. Alternatively, the camera 13 is, for example, a rear-facing camera 13b (see FIG. 7E) provided on a rear surface of the electronic device 1 (a surface on an opposite side from the surface having the display 14 provided thereto). In the present embodiment, the camera 13 includes the front-facing camera 13a and the rear-facing camera 13b.

The display 14 displays a screen. The screen includes at least one of, for example, characters, images, symbols, and graphics. The display 14 may be an LCD (Liquid Crystal Display). The display 14 may be an organic EL (Electroluminescence) panel or an inorganic EL panel. In the present embodiment, the display 14 is a touchpanel display (a touchscreen display). The touchpanel display detects a contact made by a finger or a stylus pen and locates a contact position. The display 14 can simultaneously detect a plurality of positions which are contacted by fingers or stylus pens.

The microphone 15 detects a sound around the electronic device 1 including a human voice.

The storage 16 serves as a memory and stores programs and data. The storage 16 temporarily stores the results of operations by the controller 11. The storage 16 may include any storage device such as a semiconductor storage device or a magnetic storage device. The storage 16 may include a plurality of types of storage devices. The storage 16 may include a combination of a portable storage medium such as a memory card and a storage medium reader.

The programs stored in the storage 16 include an application for running in the foreground or the background and a control program for assisting the running of the application. For example, the application causes the controller 11 to perform an operation corresponding to a gesture. The control program is, for example, an OS (Operating System). The application and the control program may be installed in the storage 16 via communication performed by the communication interface 17 or the storage medium.

The communication interface 17 is an interface that enables wired or wireless communication. A communication method used by the communication interface 17 according to an embodiment conforms to a wireless communication standard. For example, wireless communication standards include communication standards for cellular phones such as 2G, 3G, and 4G. Communication standards for cellular phones include, for example, LTE (Long Term Evolution) and W-CDMA (Wideband Code Division Multiple Access). Communication standards for cellular phones also include, for example, CDMA2000 and PDC (Personal Digital Cellular). Communication standards for cellular phones further include, for example, GSM® (Global System for Mobile communications; GMS is a registered trademark in Japan, other countries, or both) and PHS (Personal Handy-phone System). For example, wireless communication standards include WiMAX (Worldwide Interoperability for Microwave Access), IEEE 802.11, and Bluetooth® (Bluetooth is a registered trademark in Japan, other countries, or both). Wireless communication standards include, for example, IrDA (Infrared Data Association) or NFC (Near Field Communication). The communication interface 17 may support one or more communication standards mentioned above.

The speaker 25 outputs sound. For example, during a telephone call, the other party's voice is output from the speaker. For example, when news or weather forecast is read aloud, the content is output as a sound from the speaker 25.

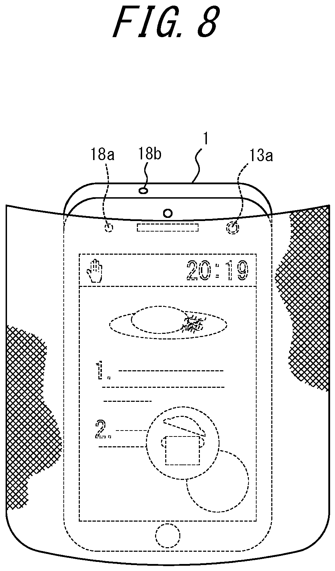

The proximity sensor 18 detects a relative distance between an object in the vicinity of the electronic device 1 and the electronic device 1 together with a moving direction of the object, in a non-contact manner. In the present embodiment, the proximity sensor 18 includes one light source infrared LED (Light Emitting Diode) and four infrared photodiodes. The proximity sensor 18 causes the light source infrared LED to irradiate the object. The proximity sensor 18 receives reflected light from the object as incident light at the infrared photodiodes. Then, the proximity sensor 18 can measure a relative distance to the object based on an output current of the infrared photodiodes. The proximity sensor 18 also detects a moving direction of the object based on temporal differences between the reflected light from the object incident on the infrared photodiodes. Thus, the proximity sensor 18 can detect an operation using an air gesture (hereinafter, referred to simply as a "gesture") performed by a user of the electronic device 1 without touching the electronic device 1. Here, the proximity sensor 18 may include a visible light photodiode. In the present embodiment, the proximity sensor 18 is configured as a plurality of proximity sensors: a first proximity sensor 18a and a second proximity sensor 18b provided on different surfaces of the electronic device 1 (e.g., see FIG. 8).

The controller 11 is configured as, for example, a processor such as a CPU (Central Processing Unit). The controller 11 may be configured as an integrated circuit such as a SoC (System-on-a-Chip) that includes integrated components. The controller 11 may be configured as a combination of a plurality of integrated circuits. The controller 11 realizes various functions by integrally controlling operation of the electronic device 1.

In particular, the controller 11 refers to the data stored in the storage 16 as necessary. The controller 11 realizes various functions by executing instructions included in the programs stored in the storage 16 and controlling other functional units including the display 14. For example, the controller 11 acquires data regarding a contact made by a user. For example, the controller 11 acquires information regarding a gesture performed by a user detected by the proximity sensor 18. For example, the controller 11 acquires information regarding the remaining time in a countdown (a timer time) from the timer 12. Also, for example, the controller 11 recognizes a running status of an application. Further, for example, the controller 11 determines an orientation of the electronic device 1 based on information regarding an acceleration detected by the acceleration sensor 21.

The UV sensor 19 can measure the level of ultraviolet light contained in sunlight.

The illuminance sensor 20 detects the intensity of ambient light incident on the illuminance sensor 20. The illuminance sensor 20 may be configured as, for example, a photodiode or a photo-transistor.

The acceleration sensor 21 detects a direction and magnitude of an acceleration applied to the electronic device 1. A value output from the acceleration sensor 21 is information regarding a detected acceleration. The acceleration sensor 21 is, for example, a three-axis (a three-dimensional) type configured to detect acceleration in an x-axis direction, a y-axis direction, and a z-axis direction. The acceleration sensor 21 may be of, for example, a piezo-resistive type or a capacitance type.

The geomagnetic sensor 22 detects the direction of geomagnetism and allows measurement of the orientation of the electronic device 1.

The atmospheric pressure sensor 23 detects air pressure (atmospheric pressure) external to the electronic device 1.

The gyro sensor 24 detects an angular velocity of the electronic device 1. The controller 11 can measure a change in the orientation of the electronic device 1 by performing time integration of the angular velocity acquired by the gyro sensor 24.

### Gesture Operation of the Electronic Device

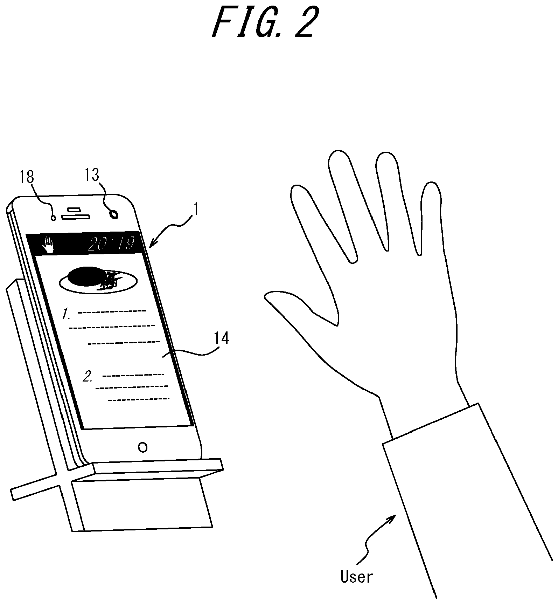

FIG. 2 illustrates a state in which a user operates the electronic device 1 by performing a gesture. In FIG. 2, the electronic device 1 is supported by a stand, by way of example. Alternatively, the electronic device 1 may leant against a wall or placed on a table. When the proximity sensor 18 detects a user's gesture, the controller 11 performs an operation corresponding to the detected gesture. In the example illustrated in FIG. 2, the operation corresponding to the gesture is scrolling of the screen displaying a recipe. For example, when the user performs a gesture moving the hand upward in the longitudinal direction of the electronic device 1, the screen is scrolled upward in conjunction with the motion of the user's hand. When the user performs a gesture moving the hand downward in the longitudinal direction of the electronic device 1, the screen is scrolled downward in conjunction with the motion of the user's hand.

The electronic device 1 illustrated in FIG. 2 is a smartphone. Alternately, the electronic device 1 may be, for example, a mobile phone, a phablet, a tablet PC, or a feature phone. The electronic device 1 is not limited to the above devices and may be, for example, a PDA, a remote controller, a portable music player, a gaming machine, an electronic book reader, a car navigation system, a home appliance, or industrial equipment (FA equipment).

### Proximity Sensor Gesture Detection Method

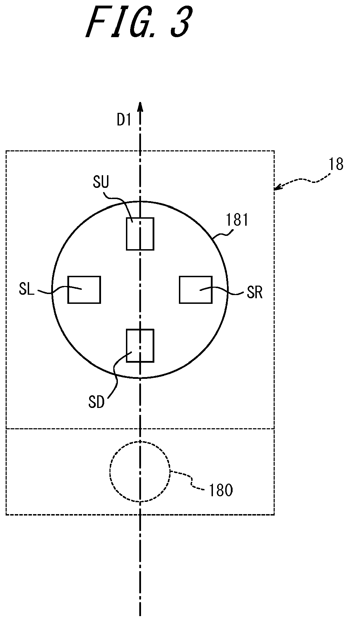

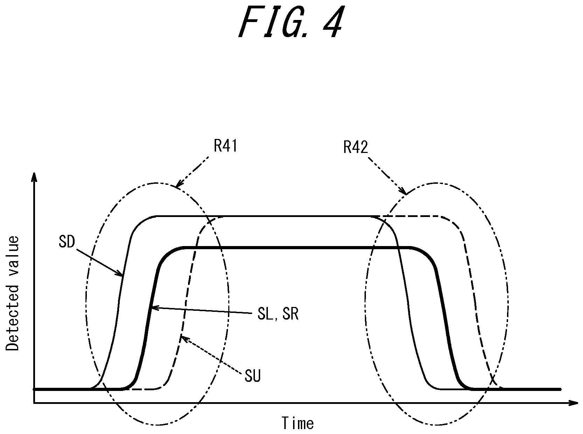

Here, a method employed by the controller 11 for detecting a user's gesture based on an output of the proximity sensor 18 will be described with reference to FIG. 3 and FIG. 4. FIG. 3 is a diagram illustrating an example configuration of the proximity sensor 18 when the electronic device 1 is viewed from the front side. The proximity sensor 18 includes a light source infrared LED 180 and four infrared photodiodes SU, SR, SD, and SL. The four infrared photodiodes SU, SR, SD, and SL detect reflected light from a detection object via a lens 181. The four infrared photodiodes SU, SR, SD, and SL are symmetrically arranged when viewed from the center of the lens 181. Here, the virtual line D1 illustrated in FIG. 3 is approximately parallel to the longitudinal direction of the electronic device 1. On the virtual line D1 of FIG. 3, the infrared photodiode SU and the infrared photodiode SD are arranged spaced apart from each other. Also, the infrared photodiode SR and the infrared photodiode SL are arranged between the infrared photodiode SU and infrared photodiode SD in the direction of the virtual line D1 of FIG. 3.

FIG. 4 illustrates an example transition of a detected value of the four infrared photodiodes SU, SR, SD, and SL when the detection object (e.g., a user's hand) moves along the direction of the virtual line D1 of FIG. 3. Here, the infrared photodiode SU and the infrared photodiode SD have the longest distance therebetween in the direction of the virtual line D1. Thus, a temporal difference between a change (e.g., an increase) in the value (i.e., the broken line) detected by the infrared photodiode SU and the same change (e.g., the increase) in the value (i.e., the narrow solid line) detected by the infrared photodiode SD becomes the largest. The controller 11 can determine a moving direction of the detection object by recognizing the temporal difference between a given change in the values detected by the photodiodes SU, SR, SD, and SL.

The controller 11 acquires the values detected by the photodiodes SU, SR, SD, and SL from the proximity sensor 18. Then, in order to recognize motion of the detection object in the direction of the virtual line D1, the controller 11 may perform time integration of a value acquired by subtracting the value detected by the photodiode SU from the value detected by the photodiode SD over a predetermined time period. In the example of FIG. 4, the integral value in the regions R41 and R42 is a value other than zero. From the change in the integrated value (e.g. a positive, zero, or negative change), the controller 11 can recognize the motion of the detection object in the direction of the virtual line D1.

Further, the controller 11 may perform time integration of a value acquired by subtracting the value detected by the photodiode SR from the value detected by the photodiode SL over a predetermined time period. From the change in the integrated value (e.g. a positive, zero, or negative change), the controller 11 can recognize a motion of the detection object in a direction orthogonal to the virtual line D1 (i.e., a direction approximately parallel to the transverse direction of the electronic device 1).

Alternatively, the controller 11 may perform the calculation using all of the values detected by the photodiodes SU, SR, SD, and SL. That is, the controller 11 may recognize the moving direction of the detection object without separating components of the longitudinal direction of the electronic device 1 and components of the transverse direction from each other for the calculation.

The gestures detected by the proximity sensor 18 include, for example, a left-right direction gesture, an up-down direction gesture, an oblique gesture, a gesture which draws a circle in a clockwise direction, and a gesture which draws a circle in a counter-clockwise direction. For example, the left-right direction gesture is a gesture performed in the direction approximately parallel to the transverse direction of the electronic device 1. The up-down direction gesture is a gesture performed in the direction approximately parallel to the longitudinal direction of the electronic device 1. The oblique gesture is a gesture performed in a direction that is not parallel to the longitudinal direction or the transverse direction of the electronic device 1 in a plane approximately parallel to the electronic device 1.

### Kitchen Mode

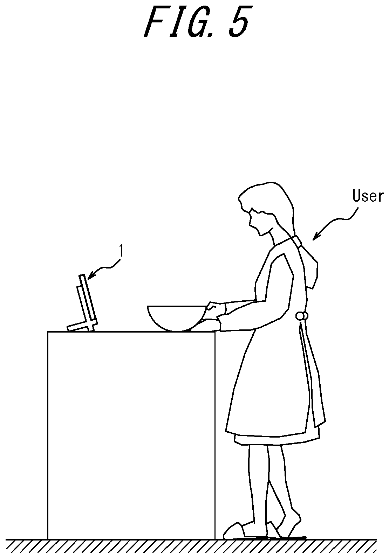

FIG. 5 illustrates an example state in which the user operates the electronic device 1 by performing a gesture. In the example of FIG. 5, the user is cooking while displaying a recipe on the display 14 of the electronic device 1 in a kitchen. In the example of FIG. 5, the proximity sensor 18 detects the user's gesture. Then, the controller 11 performs an operation corresponding to the gesture detected by the proximity sensor 18. For example, the controller 11 can perform an operation to scroll the recipe in accordance with a particular gesture (e.g., motion of the user's hand in the up-down direction). During cooking, the user's hand may get messy or wet. However, the user can scroll the recipe without touching the electronic device 1. Thus, the user can avoid smudging the display 14 or contaminating the user's hand with germs or the like on the display 14.

Here, the electronic device 1 has a plurality of modes. The modes refer to operation modes (operating states or operating conditions) that limit the overall operations of the electronic device 1. Only one of the modes can be selected at a time. In the present embodiment, the modes of the electronic device 1 include at least a first mode and a second mode. The first mode is a normal operation mode (a normal mode) suitable for use in rooms other than a kitchen and outside. The second mode is an operation mode (a kitchen mode) of the electronic device 1 suitably used when a user is cooking viewing a recipe in the kitchen. As described above, the second mode enables input operations made by gestures.

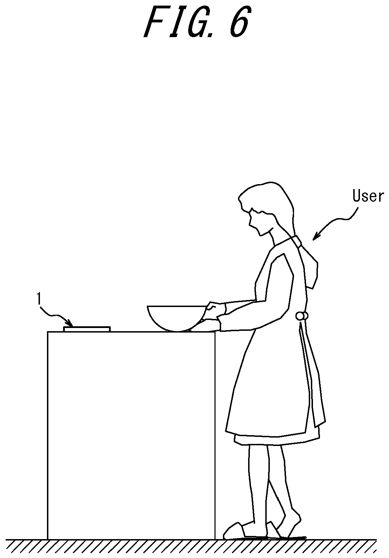

In the second mode (the kitchen mode), the electronic device 1 detects a gesture using the proximity sensor 18. Here, it is assumed that the proximity sensor 18 is provided only on the front surface of the electronic device 1. In this case, it is preferable that the electronic device 1 is supported by a stand or the like such that the front surface is directed to the user and the user's gesture can be detected (see FIG. 5). However, in some cases the user uses the electronic device 1 while it is placed on the table as illustrated in FIG. 6. In particular, in cases where there is no stand or wall against which the electronic device 1 may be leant, the user may put the electronic device 1 on the table with the front surface facing up. In this case, the user needs to extend their hand to above the electronic device 1 before performing a gesture. Thus, there is a risk that the user experiences poor operability in performing input operations by gesture.

The electronic device 1 according to the present embodiment includes the first proximity sensor 18a and the second proximity sensor 18b. One of the first proximity sensor 18a and the second proximity sensor 18b is selected based on a state of the device (the electronic device 1). Here, the second proximity sensor 18b is provided on a surface different from a surface having the first proximity sensor 18a provided thereon. The electronic device 1 according to the present embodiment can improve the user operability associated with a gesture by appropriately selecting the first proximity sensor 18a or the second proximity sensor 18b based on a state of the electronic device 1 as described later.

### Surface Provided with Proximity Sensor

FIG. 7A is a top view (a plan view) of the electronic device 1 according to the present embodiment. FIG. 7B is a left-side view of the electronic device 1. FIG. 7C is an elevation view of the electronic device 1. FIG. 7D is a right-side view of the electronic device 1. FIG. 7E is a rear view of the electronic device 1. FIG. 7F is a bottom view of the electronic device 1. FIG. 7A to FIG. 7F illustrate respective exterior planes (respective housing surfaces) of the electronic device 1. Here, FIG. 7A to FIG. 7F schematically illustrate the respective planes and do not illustrate all constituent elements of the electronic device 1.

As illustrated in FIG. 7C, the first proximity sensor 18a of the present embodiment is provided on the front surface of the electronic device 1. The front surface of the electronic device 1 is also provided with the display 14 and the front-facing camera 13a. In the example of FIG. 7C, the first proximity sensor 18a is arranged at a position above the display 14. However, the position of the first proximity sensor 18a is not limited thereto. For example, the first proximity sensor 18a may be provided at a position below the display 14.

As illustrated in FIG. 7A, the second proximity sensor 18b of the present embodiment is provided on the top surface (the plane surface) of the electronic device 1. Although in the present embodiment the second proximity sensor 18b is located slightly leftward from the center in the transverse direction of the front surface of the electronic device 1, this is not restrictive. Also, the second proximity sensor 18b may be provided on any other surface, other than the top surface (the plane surface), different from the surface having the first proximity sensor 18a provided thereon. For example, the second proximity sensor 18b may be provided on the bottom surface (as illustrated in FIG. 7F). Alternatively, the second proximity sensor 18b may be provided on the rear surface (as illustrated in FIG. 7E) in a manner similar to the rear-facing camera 13b.

FIG. 8 is a diagram illustrating a state in which the electronic device 1 is in a pocket. For example, there may be a case in which the electronic device 1 that operates the second mode (the kitchen mode) is carried in a pocket of a shirt or an apron. At this time, the electronic device 1 is in a vertical orientation (an example predetermined orientation of the electronic device 1) as illustrated in FIG. 8. Here, the vertical orientation refers to a state in which the longitudinal direction of the front surface of the electronic device 1 is approximately parallel to the gravity direction.

Here, when the timer 12 finishes counting down and an alarm goes off while the user is moving, the user may wish to stop the alarm by performing a gesture (e.g., by moving a hand or a portion of the face such as the jaw). Also, when the electronic device 1 configured as a mobile phone receives a phone call while the user is moving, the user may wish to answer the phone call by performing a gesture (e.g., by moving a hand in the transverse direction of the front surface of the electronic device 1 or shaking the head). However, the first proximity sensor 18a provided on the front surface of the electronic device 1 is enclosed in the pocket and cannot detect a user's gesture.

The controller 11 selects between first gesture detection based on a value output from the first proximity sensor 18a and second gesture detection based on a value output from the second proximity sensor 18b, based on whether the electronic device 1 is in the vertical orientation (as an example of the state of the device). In a specific example, the controller 11 selects the second gesture detection when the electronic device 1 is in the predetermined orientation (i.e., the vertical orientation), or selects the first gesture detection when the electronic device 1 is not in the predetermined orientation. In the example of FIG. 8, the controller 11 detects a user's gesture based on an output (a detection signal) of the second proximity sensor 18b.

By performing a gesture near, for example, the top surface of the electronic device 1 (i.e., within a detection range of the second proximity sensor 18b), the user can stop an alarm or answer a phone call while the user is moving with the electronic device 1 in a pocket. Thus, the user operability associated with a gesture is improved. Especially in a case in which the electronic device 1 is in a chest pocket, the user can stop an alarm or answer a phone call by performing a gesture such as moving the chin or shaking the head near the second proximity sensor 18b even when the user's both hands are not free.

The controller 11 determines a state of the own device using, for example, a value output from the acceleration sensor 21. In the present embodiment, the controller 11 acquires information regarding an acceleration detected by the acceleration sensor 21. Then, the controller 11 determines the orientation of the electronic device 1 based on a direction of the gravitational acceleration obtained from the acceleration information and selects the first gesture detection or the second gesture detection.

Although the case in which the electronic device 1 is in a pocket is described as an example, the controller 11 can also improve the operability by performing the same operation in a case in which, for example, the electronic device 1 is in a bag.

### Another Example of Providing Second Proximity Sensor

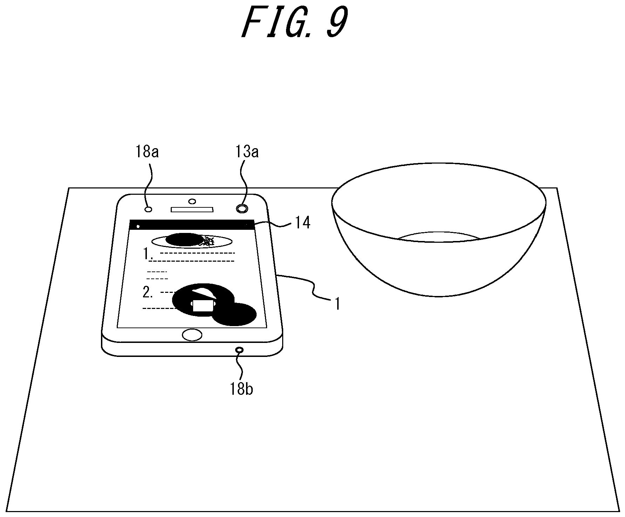

Here, in the electronic device 1 according to the present embodiment, the second proximity sensor 18b is provided on the top surface. However, the second proximity sensor 18b may be provided on the bottom surface in another example (FIG. 7F). For example, FIG. 9 illustrates a state in which the electronic device 1 that includes the second proximity sensor 18b provided on the bottom surface is placed on a table with the front surface facing up.

For example, a user may cook while viewing a recipe displayed by the electronic device 1 that operates in the second mode (the kitchen mode) and is placed on the table as illustrated in FIG. 9. In this case, in order to scroll the recipe, for example, the user needs to extend their hand to the vicinity of the front surface of the electronic device 1 during cooking. Thus, there is a risk that the user experiences poor operability in performing input operations by gesture.

In addition to the operation for selecting the first gesture detection or the second gesture detection based on the orientation of the electronic device, when one of the first proximity sensor 18a and the second proximity sensor 18b satisfies a predetermined condition, the controller 11 performs an operation to select the other one of the proximity sensors. In the present embodiment, the predetermined condition is the elapse of a predetermined time period (e.g., 30 seconds) without a gesture input operation. Here, the predetermined condition is not limited thereto. For example, the predetermined condition may be the elapse of predetermined time period regardless of the presence or absence of a gesture input operation. Or, the predetermined condition may be detection of a user's particular gesture (e.g., a gesture of drawing a circle).

In the example of FIG. 9, because the electronic device 1 is not originally in the predetermined orientation (vertical orientation), the controller 11 selects the first gesture detection based on a value output from the first proximity sensor 18a. However, when the predetermined time period has elapsed without a gesture input operation, the controller 11 detects a user's gesture based on an output from the second proximity sensor 18b, rather than the first proximity sensor 18a.

Without the necessity for the user to extend their hand to the vicinity of the front surface of the electronic device 1, the gesture detection based on an output from the second proximity sensor 18b is performed after the predetermined time period. The user can perform an input operation by performing a gesture near the bottom surface (within the detection range of the second proximity sensor 18b) of the electronic device 1. That is, the user does not need to extend their hand to the vicinity of the front surface of the electronic device 1, and thus the user operability associated with a gesture is improved.

Here, in the example of FIG. 8 (i.e., an example state in which the electronic device is in a pocket), the controller 11 may perform the operation to switch between the proximity sensors 18 when the predetermined time period has elapsed without a gesture input operation. For example, the first proximity sensor 18a is enclosed in the pocket in the example of FIG. 8 and cannot detect a user's gesture. Accordingly, after the predetermined time period, the controller 11 selects an output of the second proximity sensor 18b and detects a user's gesture. Here, "without a gesture input operation" includes both a case in which the proximity sensor 18 does not receive reflected light from an object and a case in which the proximity sensor 18 receives reflected light from an object but there is no gesture (motion). In a case in which the first proximity sensor 18a is enclosed in a pocket as illustrated in the example of FIG. 8, the first proximity sensor 18a receives reflected light from an object but there is no motion. Thus, the controller 11 determines that there is no gesture input operation.

Also, in a case in which the electronic device 1 is on a table with the front surface facing down in FIG. 9, the controller 11 can appropriately select an output of the second proximity sensor 18b. In this case also, although the first proximity sensor 18a receives reflected light from an object (the table), there is no motion (gesture). Thus, the controller 11 determines that there is no gesture input operation.

### Still Another Example of Providing Second Proximity Sensor

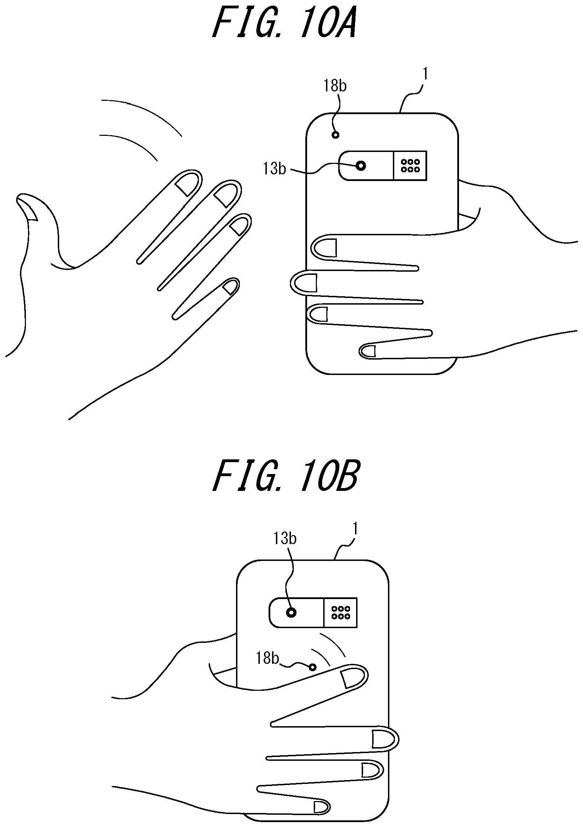

In still another example, the second proximity sensor 18b may be provided on the rear surface (FIG. 7E). For example, FIG. 10A and FIG. 10B are diagrams illustrating an example state in which the user is holding the electronic device 1 having the second proximity sensor 18b provided on the rear surface and performing a gesture input operation.

In the examples illustrated in FIG. 10A and FIG. 10B, the electronic device 1 is in the predetermined orientation (the vertical orientation). Thus, the controller 11 selects the second gesture detection based on a value output from the second proximity sensor 18b. That is, the controller 11 detects a user's gesture based on an output from the second proximity sensor 18b provided on the rear surface of the electronic device 1.

In the example of FIG. 10A, the second proximity sensor 18b is positioned in the vicinity of the top edge on the rear surface of the electronic device. The portion of the electronic device 1 from the lower edge to the vicinity of the center is held by the user's left hand. Thus, the user can perform a gesture with the right hand on the rear side of the electronic device. In this way, the user does not block the display 14 by performing the gesture. Thus, the user can keep viewing the display 14 even when performing a gesture. Here, a third party (someone other than the user), rather than the user, can operate the electronic device 1 by performing a gesture on the rear side of the electronic device 1.

In the example of FIG. 10B, the second proximity sensor 18b is positioned in the vicinity of the center of the electronic device. The portion of the electronic device 1 from the lower edge to the center is held by the user's right hand. Thus, the user can perform a gesture with a finger (e.g., an index finger) of the right hand on the rear side of the electronic device 1. At this time, the user can operate the electronic device 1 with one hand, including performing a gesture. In the example of FIG. 10B also, the user does not block the display 14 by performing the gesture.

### Flowchart

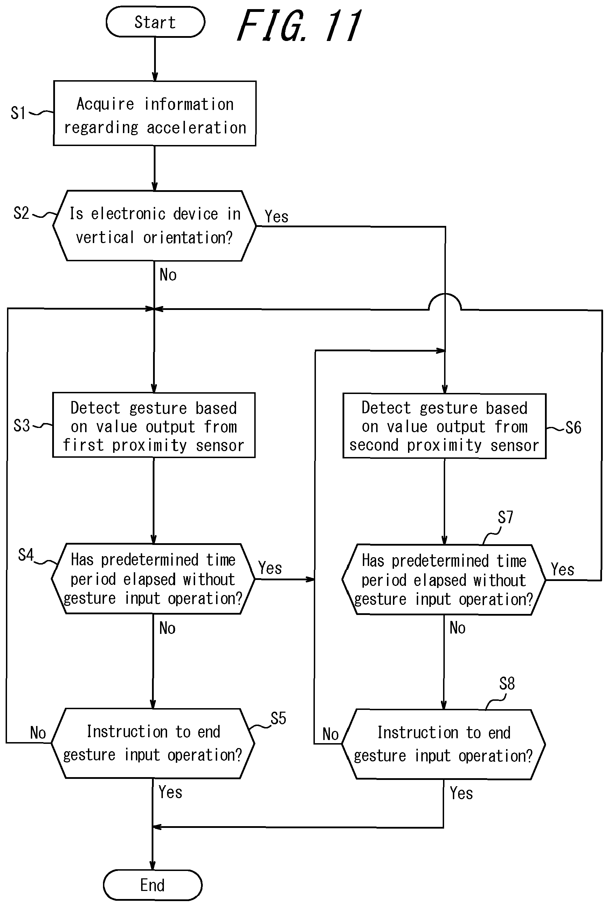

FIG. 11 is a flowchart illustrating an example selection operation for selecting the first proximity sensor 18a or the second proximity sensor 18b performed by the electronic device 1. At the initiation of the operation illustrated in FIG. 11, the electronic device 1 is operating in the second mode (the kitchen mode) that enables the gesture input operation.

The controller 11 acquires information regarding the acceleration detected by the acceleration sensor 21 (step S1). Then, the controller 11 determines the orientation of the electronic device 1 based on the information regarding the acceleration.

When the electronic device 1 is not in the vertical orientation (in a case of No in step S2), the controller 11 detects a gesture based on a value output from the first proximity sensor 18a (step S3).

When the predetermined time period has elapsed without a gesture input operation based on a value output from the first proximity sensor 18a (in a case of Yes in step S4), the controller 11 proceeds to step S6. That is, the controller 11 selects the second proximity sensor 18b over the first proximity sensor 18a.

When there is a gesture input operation based on a value output from the first proximity sensor 18a within the predetermined time period, or before the predetermined time period has elapsed without a gesture input operation (in a case of No in step S4), the controller 11 proceeds to step S5.

When there is an instruction to end a gesture input operation by, for example, cancellation of the second mode made by the user (in a case of Yes in step S5), the controller 11 ends the sequence of switching operations.

When there is no instruction to end the gesture input operation (in a case of No in step S5), the controller 11 returns to step S3.

When the electronic device 1 is in the vertical orientation (in a case of Yes in step S2), the controller 11 detects a gesture based on a value output from the second proximity sensor 18b (step S6).

When the predetermined time period has elapsed without a gesture input operation based on a value output from the second proximity sensor 18b (in a case of Yes in step S7), the controller 11 proceeds to step S3. That is, the controller 11 selects the first proximity sensor 18a over the second proximity sensor 18b.

When there is a gesture input operation based on a value output from the second proximity sensor 18b within the predetermined time period, or before the predetermined time period has elapsed without a gesture input operation (in a case of No in step S7), the controller 11 proceeds to step S8.

When there is an instruction to end a gesture input operation by, for example, cancellation of the second mode made by the user (in a case of Yes in step S8), the controller 11 ends the sequence of switching operations.

When there is no instruction to end the gesture input operation (in a case of No in step S8), the controller 11 returns to step S6.

As described above, the electronic device 1 according to the present embodiment includes the first proximity sensor 18a and the second proximity sensor 18b. The electronic device 1 further includes the controller 11 configured to select between the first gesture detection based on a value output from the first proximity sensor 18a and the second gesture detection based on a value output from the second proximity sensor 18b based on a state of the device (the electronic device 1). The state of the device may include, for example, whether the device is in the predetermined orientation (e.g., the vertical orientation). The state of the device may include whether the predetermined time period has elapsed without a gesture input operation. The first proximity sensor 18a or the second proximity sensor 18b is appropriately selected by the controller 11 based on the state of the device. This eliminates the necessity for the user to operate the electronic device 1 in accordance with the orientation thereof or to adjust the orientation of the electronic device 1. Thus, the electronic device 1 according to the present embodiment can improve the user operability in relation to a gesture.

### Other Embodiments

Although the present disclosure has been described based on the figures and the embodiments, it should be appreciated that those who are skilled in the art may easily perform variations or alteration based on the present disclosure. Accordingly, such variations and alterations are to be included in the scope of the present disclosure. For example, the functions included in each of the means or steps may be rearranged avoiding a logical inconsistency, such that a plurality of means or steps are combined, or one means or step is subdivided.

In the above embodiment, the controller 11 detects a gesture by selecting one of an output from the first proximity sensor 18a and an output from the second proximity sensor 18b. That is, when an output from one of the proximity sensors 18 is selected, it is likely that the other one of the proximity sensors 18 is in operation as well. Here, in order to save power consumption, the controller 11 may switch between the first proximity sensor 18a and the second proximity sensor 18b based on the state of the device. That is, the controller 11 may turn off (stop) one of the proximity sensors 18 that is not being used to detect a gesture. For example, when the first proximity sensor 18a is selected in step S3 of FIG. 11, the controller 11 turns on the first proximity sensor 18a and turns off the second proximity sensor 18b. Also, when the second proximity sensor 18b is selected in step S6 of FIG. 11, the controller 11 turns on the second proximity sensor 18b and turns off the first proximity sensor 18a. Here, the controller 11 may determine the state of the device using a value output from the acceleration sensor 21. Also, when one of the first proximity sensor 18a and the second proximity sensor 18b satisfies the predetermined condition (e.g., the elapse of the predetermined time period), the controller 11 may switch between the first proximity sensor 18a and the second proximity sensor 18b.

In the electronic device 1 of the above embodiment, the first proximity sensor 18a is provided on the front surface and the second proximity sensor 18b is provided on the top surface. In another example, the second proximity sensor 18b is provided on the bottom surface or the rear surface, rather than the top surface. Here, the first proximity sensor 18a and the second proximity sensor 18b may be provided on any surfaces different from each other. For example, the electronic device 1 may include the first proximity sensor 18a provided on the rear surface and the second proximity sensor 18b provided on a side surface. In this case, when the predetermined time period has elapsed without a gesture input operation based on an output from one of the proximity sensors 18, the controller 11 may select an output from the other one of the proximity sensors 18. That is, when the predetermined time period has elapsed without a gesture input operation, the controller 11 may select the other one of the proximity sensors 18, regardless of the orientation of the electronic device 1.

In the above embodiment, the electronic device 1 includes two proximity sensors 18. Here, the electronic device 1 may include three or more proximity sensors 18. In this case, the electronic device 1 includes at least two surfaces having the proximity sensors 18 provided thereon. Each of the three or more proximity sensors 18a may be provided on a different surface. Alternatively, for example, two proximity sensors 18 may be provided on the front surface, and one proximity sensor 18 may be provided on the rear surface. Respective operations of three or more proximity sensors 18 may be switched therebetween in a predetermined order when, for example, the predetermined time period has elapsed without a gesture input operation.

At least some outputs from the plurality of proximity sensors 18 provided to the electronic device 1 may be used by the controller 11 to determine the orientation of the electronic device 1. In FIG. 10B, for example, a third proximity sensor 18c may be provided in a lower portion (i.e., the portion held by the user's right hand) of the rear surface of the electronic device 1. The controller 11 recognizes that the third proximity sensor 18c is covered based on an input from the third proximity sensor 18c. That is, the controller 11 can determine that the electronic device 1 is in the vertical orientation held by the user. By using at least some outputs from the proximity sensors 18 (the third proximity sensor 18c in this example), the controller 11 can more accurately determine the orientation of the electronic device 1. Here, when the controller 11 determines that the electronic device 1 is held by the user, the controller 11 may move an icon displayed by the display 14 downward (e.g., by scrolling) to facilitate a tapping operation with one hand.

The controller 11 may use an output from the gyro sensor 24 to determine the orientation of the electronic device 1. In this case, the controller 11 can also recognize a change in the orientation of the electronic device 1. The controller 11 may use an output from the illuminance sensor 20 to determine a state of the own device. For example, when the controller 11 recognizes that the illuminance of ambient light is lower than a threshold (e.g., 50 lux) based on an output from the illuminance sensor 20, the controller 11 may determine that the electronic device 1 is in a pocket or a bag.

Many aspects of the disclosure herein may be represented by a series of operations executed by a computer system or other hardware capable of executing a program instruction. The computer system or the other hardware includes, for example, a general-purpose computer, a PC (personal computer), a specialized computer, a workstation, a PCS (Personal Communications System, a personal mobile communication system), a mobile (cellular) phone, a mobile phone having a data processing function, an RFID receiver, a game machine, an electronic notepad, a laptop computer, a GPS (Global Positioning System) receiver, and other programmable data processing apparatuses. Note that in each embodiment the various operations or control methods are executed by a dedicated circuit implemented by a program instruction (software) (e.g., discrete logic gates interconnected to perform a specific function), a logical block, a program module and/or the like executed by at least one processor. The at least one processor for executing the logical block, the program module and/or the like includes, for example, at least one microprocessor, CPU (Central Processing Unit), ASIC (Application Specific Integrated Circuit), DSP (Digital Signal Processor), PLD (Programmable Logic Device), FPGA (Field Programmable Gate Array), a controller, a microcontroller, a microprocessor, an electronic device, and other apparatuses designed to be capable of executing the functions described herein, and/or a combination thereof. The embodiments presented herein are implemented by, for example, hardware, software, firmware, middleware, a microcode, or any combination thereof. The instruction may be a program code or a code segment for executing a necessary task. The instruction may be stored in a machine-readable non-transitory storage medium or in another medium. The code segment may represent any combination of a procedure, a function, a subprogram, a program, a routine, a subroutine, a module, a software package, a class or an instruction, and a date configuration or a program statement. The code segment transmits/receives information, a data argument, a variable, and storage contents with another code segment or a hardware circuit. Thus, the code segment is connected to the another code segment or the hardware circuit.

The storage 16 used herein may be a computer readable tangible carrier (medium) including a range of a solid-state memory, a magnetic disk, or an optical disk. Such a media stores an appropriate set of computer instructions such as program modules for causing the processor to execute the techniques disclosed herein, or data structures. The computer-readable media includes: electrical connection with one or more wires; a magnetic disk storage; a magnetic cassette; a magnetic tape; another type of magnetic storage device; an optical storage device such as CD (Compact Disk), LD® (Laser Disk, LD is a registered trademark in Japan, other countries, or both), DVD® (Digital Versatile Disc, DVD is a registered trademark in Japan, other countries, or both), a Floppy® disk (Floppy is a registered trademark in Japan, other countries, or both), and a Blu-ray® disc (Blu-ray is a registered trademark in Japan, other countries, or both); a portable computer disk; RAM (Random Access Memory); ROM (Read-Only Memory); EPROM (Erasable Programmable Read-Only Memory; EEPROM (Electrically Erasable Programmable Read-Only Memory); a flash memory; other tangible storage media capable of storing information; and any combination of the above. The memory may be provided inside and/or outside a processor/processing unit. As used herein, the term "memory" refers to any types of a long-term memory, a short-term memory, a volatile memory, a nonvolatile memory, or other memories and is not limited to a particular type of memory, a particular number of memories, or a particular medium to store information.

### REFERENCE SIGNS LIST

- 1: electronic device
- 11: controller
- 12: timer
- 13: camera
- 13a: front-facing camera
- 13b: rear-facing camera
- 14: display
- 15: microphone
- 16: storage
- 17: communication interface
- 18: proximity sensor
- 18a: first proximity sensor
- 18b: second proximity sensor
- 18c: third proximity sensor
- 19: UV sensor
- 20: illuminance sensor
- 21: acceleration sensor
- 22: geomagnetic sensor
- 23: atmospheric pressure sensor
- 24: gyro sensor
- 25: speaker
- 180: light source infrared LED
- 181: lens
- SU, SR, SD, SL: photodiode

## Claims

1. An electronic device comprising:
a first proximity sensor;
a second proximity sensor; and
a controller configured to select between first gesture detection based on a value output from the first proximity sensor and second gesture detection based on a value output from the second proximity sensor, based on a state of the electronic device.

2. The electronic device according to claim 1,
wherein, when one of the first proximity sensor and the second proximity sensor satisfies a predetermined condition, the controller selects the other one of the first proximity sensor and the second proximity sensor.

3. An electronic device comprising:
a first proximity sensor;
a second proximity sensor; and
a controller configured to switch between the first proximity sensor and the second proximity sensor, based on a state of the electronic device.

4. The electronic device according to claim 3,
wherein, when one of the first proximity sensor and the second proximity sensor satisfies a predetermined condition, the controller switches to the other one of the first proximity sensor and the second proximity sensor.

5. The electronic device according to any one of claims 1 to 4, further comprising an acceleration sensor,
wherein the controller determines the state of the electronic device using a value output from the acceleration sensor.

6. The electronic device according to any one of claims 1 to 5,
wherein the second proximity sensor is provided on a surface different from a surface having the first proximity sensor provided thereon.

7. The electronic device according to any one of claims 1 to 6,
wherein the state of the electronic device includes whether the electronic device is in a predetermined orientation.
